# EUROPÄISCHE PATENTSCHRIFT

(11) **EP 0 596 332 B1**
(45) Veröffentlichungstag und Bekanntmachung des Hinweises auf die Patenterteilung: **15.05.1996**
(21) Anmeldenummer: 93117013.8
(22) Anmeldetag: 21.10.1993
(51) Int. Cl.: E02B 8/02, B01D 29/03, B01D 29/64

(54) **Vorrichtung zum Reinigen grosser Wassermengen von Rechengut**
Device for cleaning large quantities of water from debris
Dispositif de nettoyage de grandes quantités d'eau de déchets

(30) Priorität: 03.11.1992 DE 4237123
(43) Veröffentlichungstag der Anmeldung: 11.05.1994
(73) Patentinhaber: Huber, Hans-Georg, D-92334 Berching (DE)
(72) Erfinder: Huber, Hans-Georg, D-92334 Berching (DE)
(74) Vertreter: Rehberg, Elmar, Dipl.-Ing.

(56) Entgegenhaltungen:
- CH-A- 190 659
- DE-A- 4 037 884
- DE-C- 212 048
- DE-U- 8 707 094
- DE-U- 9 205 674
- GB-A- N6 172

## Beschreibung

Die Erfindung bezieht sich auf eine Vorrichtung zum Reinigen großer Wassermengen von Rechengut an Überlaufkanten, mit den im Oberbegriff des Anspruches 1 angegebenen Merkmalen. Für verschiedene Anwendungsfälle ergibt sich die Notwendigkeit, große Wassermengen zu sieben und von schwimmendem Rechengut zu reinigen. Wenn z. B. Kühlwasser in großer Menge aus einem Fluß entnommen werden soll, wird in der Regel eine Überlaufkante geschaffen und das überlaufende Wasser entnommen. Dieses soll je nach Anforderung frei von Rechengut bis hin zu schwimmenden Schwebestoffen sein. Aber auch in der kommunalen Abwassertechnik stellt sich die Aufgabe des Siebens großer Wassermengen insbesondere bei und nach dem Eintritt eines großen Regenereignisses, beispielsweise eines Gewitterregens. Es fällt dann in relativ kurzer Zeit eine erhebliche Wassermenge an, für deren Bewältigung die Kläranlage nicht ausgelegt ist. Es werden hier Regenrückhaltebecken und Regenüberlaufbecken eingesetzt, um die große Wassermenge zwischenzuspeichern und nach dem Ende des Regenereignisses gezielt abzuarbeiten. Aber auch solche Regenrückhaltebecken haben nur eine begrenzte Aufnahmekapazität, die in selteneren Fällen überschritten wird, so daß das dann anfallende überschüssige Wasser ungeklärt z. B. in einen Fluß geleitet wird. Gerade bei solchen Gewitterregen und insbesondere nach Trockenwetterperioden führt die anfallende Wassermenge eine große Schmutzfracht mit sich, die abgeschieden werden soll.

Eine Vorrichtung der eingangs beschriebenen Art ist aus der DE-A-40 37 884 bekannt. Die Abscheidefläche ist als Stück eines Zylindermantels ausgebildet und mit parallel zur Überlaufkante liegender Achse angeordnet. Die Abscheidefläche erstreckt sich über etwa 90° des Zylindermantels, und die Achse des Zylindermantels ist etwa um den Radius des Zylindermantels tiefer als die Überlaufkante vorgesehen, so daß das über die Überlaufkante fließende Wasser etwa am höchsten Punkt des Zylindermantels zugeführt wird. Die Abscheidefläche ist damit flächenmäßig begrenzt, und es besteht die Gefahr, daß nach einem Zusetzen der Abscheidefläche das Wasser über die Vorrichtung ungereinigt überströmt und in einen Ablaufkanal gelangt, der quer zur Strömungsrichtung über die Überlaufkante verläuft. Der Abscheidefläche ist eine um die Achse des Zylindermantels angetriebene Übernahmeeinheit zur Abnahme des an der Abscheidefläche abgeschiedenen Rechenguts zugeordnet. Die Übernahmeeinheit wird durch das überströmende Wasser selbst angetrieben, so daß der Antrieb abhängig von dem Wasserstand über der Überlaufkante ist. Bei einem niedrigen Wasserstand besteht die Gefahr, daß die Übernahmeeinheit nicht mehr angetrieben wird. Bei einem hohen Wasserstand besteht die Gefahr, daß sich die flächenmäßig begrenzte Abscheidefläche schnell zusetzt und das weitere Wasser ungereinigt überströmt.

Der Erfindung liegt die Aufgabe zugrunde, eine Vorrichtung der eingangs beschriebenen Art aufzuzeigen, mit der große Wassermengen verläßlich gereinigt werden können, ohne daß die Gefahr besteht, daß sich die Abscheidefläche zusetzt.

Erfindungsgemäß wird dies dadurch erreicht, daß die Abscheidefläche mit ihrer Achse etwa auf der Höhe der Überlaufkante angeordnet ist und sich bogenförmig nach oben oder unten über etwa 180° des liegenden Zylindermantels erstreckt, so daß eine Zwangsdurchströmung der Abscheidefläche erfolgt, und daß eine Querfördereinrichtung für den seitlichen Abtransport des abgeschiedenen Rechenguts vorgesehen ist.

Damit wird eine Vorrichtung geschaffen, bei der die wirksame Abscheidefläche zunächst einmal vergrößert ist. Die Abscheidefläche in Form eines Stücks eines Zylindermantels ist mit der Achse des Zylindermantels etwa auf gleicher Höhe wie die Überlaufkante angeordnet, so daß die Möglichkeit besteht, die vergrößerte Abscheidefläche auch auszunutzen. Es findet eine Zwangsdurchströmung statt, d. h. die ankommende Flüssigkeit muß durch die Abscheidefläche hindurchgeleitet werden. Wenn die angetriebene Übernahmeeinheit ausfällt, steigt der Wasserspiegel, und es wird ein weiterer Bereich der Abscheidefläche, der nicht zugesetzt ist, zur Verfügung gestellt. Allenfalls steigt hier der Wasserspiegel. Es besteht insoweit die Möglichkeit, einen intermittierenden Antrieb für die Übernahmeeinheit vorzusehen und beispielsweise in Abhängigkeit eines steigenden Wasserspiegels zu steuern. Es ist aber auch möglich, die Übernahmeeinheit kontinuierlich oder durch eine Zeitsteuerung ausgelöst taktweise zu betreiben. Damit wird eine sich kontinuierlich selbst reinigende Vorrichtung geschaffen, die eine große Betriebssicherheit aufweist. Die Vorrichtung ermöglicht das Abscheiden und Herausholen des Rechenguts aus der durchfließenden großen Wassermenge, so daß dieses Rechengut, beispielsweise Laub, Äste, Getränkedosen u. dgl., nicht erneut abgeschieden werden muß.

Es ist eine Querfördereinrichtung für den seitlichen Abtransport des abgeschiedenen Rechenguts vorgesehen, so daß die Durchflußrichtung des Wassers nicht verändert werden muß. Die Querfördereinrichtung hat die Aufgabe, daß Rechengut von der Übernahmeeinheit zu übernehmen und seitlich hinwegzufördern. Als Querfördereinrichtung kann eine Schneckenfördereinrichtung mit Gehäuse, Förderwendel und Antrieb vorgesehen sein. Die Achse der Schneckenfördereinrichtung erstreckt sich wiederum parallel zur Achse des Zylinderabschnittes der Abscheideeinrichtung sowie parallel zur Überlaufkante. Über die Querfördereinrichtung wird das Rechengut hinweggefördert und kann z. B. in einen Container abgeworfen werden.

Die Abscheidefläche kann aus mehreren parallel zueinander angeordneten Rechenstäben bestehen. Als zugeordnete Übernahmeeinheit kann eine die Rechenstäbe durchdringende kammartige Harke vorgesehen sein. Die Abscheidefläche ist damit an einem Rechen aus Rechenstäben gebildet, wobei die Rechenstäbe längs Umfangslinien des Zylinders angeordnet sind und sich über einen Teil des Umfangs jeweils erstrecken. Zwischen den benachbarten Rechenstäben besteht jeweils ein Abstand, durch den die kammartig ausgebildete Harke hindurchgreift, so daß das Rechengut von der Abscheidefläche abgenommen und durch die kammartige Harke aus dem Bereich des durchfließenden Wassers heraustransportiert wird. Gleichzeitig wird damit die Abscheidefläche bei jedem Durchgang der kammartigen Harke gereinigt. Der Abstand der Rechenstäbe voneinander ist maßgeblich für den Abscheidegrad. Bei relativ großen Wassermengen wird das Rechengut im Sinn einer Grobreinigung des Wassers abgeschieden.

Es ist aber auch möglich, daß die Abscheidefläche aus einer Siebwandung besteht und als Übernahmeeinheit eine Förderwendel vorgesehen ist. Die Förderwendel streicht dann mit dem Umfang an der Siebwandung entlang und nimmt das abgeschiedene Rechengut mit. Die Ausbildung einer Abscheidefläche an einer Siebwandung gestattet es, auch eine feinere Siebung durchzuführen, also vergleichsweise kleineres Rechengut aus dem Wasser zu entfernen. Die Geometrie der Löcher oder Schlitze in der Siebwandung ist dabei maßgebend für das abgeschiedene Rechengut.

Bei dieser Ausführungsform kann die Förderwendel zusammen mit der Siebwandung zugleich die Querfördereinrichtung bilden.

Wenn die Abscheidefläche an einem Rechen als Stück eines Zylindermantels realisiert wird, kann die Abscheidefläche außen oder innen an den Rechenstäben vorgesehen sein. Bei einer Abscheidung außen erstrecken sich die Rechenstäbe im Anschluß an die Überlaufkante bogenförmig nach oben sowie dann wieder abwärts. Wenn die Abscheidefläche innen realisiert ist, erstrecken sich die Rechenstäbe von der Abscheidekante bogenförmig nach unten, von wo sie wieder ansteigen, um gleichsam eine Mulde für das abgeschiedene Rechengut zu bilden.

Der Abscheidefläche und der Übernahmeeinheit kann eine Übergabeeinrichtung zugeordnet sein, die kammartig ausgebildet ist und die Rechenstäbe durchsetzt. Diese Übergabeeinrichtung hat die Aufgabe, das Rechengut von der Aufnahmeeinheit zu übernehmen und in den nachgeschalteten Querförderer zu leiten. Die Übergabeeinrichtung selbst ist beweglich angeordnet, um zwischengelagertes Rechengut in den Querförderer zu überführen und damit selbst wieder gereinigt zu werden, um bei einem erneuten Durchgang der Übernahmeeinheit wiederum Rechengut ableiten zu können.

Die Übergabeeinrichtung ist zweckmäßig außerhalb des Umfangs der Übernahmeeinheit schwenkbar gelagert und weist einen Anschlag für einen auf der Welle der Übernahmeeinheit angeordneten Nocken auf. Damit wird vorteilhaft erreicht, daß die Übergabeeinrichtung durch den Antrieb der Übernahmeeinheit taktweise bewegt und gereinigt wird.

Die Übergabeeinrichtung ist oberhalb der Querfördereinrichtung gelagert und reicht mit ihren kammartigen Zinken in den Umfangsweg der Übernahmeeinheit ein.

Wenn die Übernahmeeinheit als Schneckenfördereinrichtung ausgebildet ist, deren Gehäuse als Siebwandung fungiert, bildet diese Vorrichtung zugleich die Querfördereinrichtung. Die Förderschnecke kann dann in eine aufwärts gerichtete Förderstrecke übergehen, um z. B. den Abwurf des Rechenguts in einen Container zu ermöglichen oder zu erleichtern.

Die Erfindung wird anhand bevorzugter Ausführungsbeispiele weiter erläutert und beschrieben. Es zeigen:
- Figur 1: einen Vertikalschnitt durch die wesentlichen Teile der Vorrichtung in einer ersten Ausführungsform,
- Figur 2: eine ähnliche Darstellung bei einer zweiten Ausführungsform,
- Figur 3: einen Vertikalschnitt durch eine Vorrichtung nach einer dritten Ausführungsform und
- Figur 4: eine Seitenansicht der Vorrichtung gemäß Figur 3.

Im Bereich einer senkrechten Wand 1 ist eine Überlaufkante 2 gebildet, über die die große, zu siebende Wassermenge 3 gemäß Pfeil 4 überströmt. Die Wassermenge 3 kommt beispielsweise aus einem Rückhaltebecken, einem Fluß o. dgl. An die Überlaufkante 2 bzw. die Wand 1 schließt ein Überlaufbecken 5 an, in welches nur gereinigtes Wasser übertritt, welches von dort entnommen oder weitergeleitet werden kann.

Die neue Vorrichtung ist relativ zur Überlaufkante 2 mit ihren wesentlichen, prinzipiellen Teilen dargestellt. Es sind bogenförmig gekrümmte Rechenstäbe 6 abständig nebeneinander angeordnet, die sich etwa über 180° eines liegendes Zylindermantels 7 erstrecken, dessen Achse 8 parallel und etwa auf der Höhe der Überlaufkante 2 angeordnet ist. Die Rechenstäbe 6 weisen der Überlaufkante 2 zugekehrt Fortsätze 9 auf, mit denen sie auf die Überlaufkante 2 aufgesetzt sind. Die Befestigung der Vorrichtung am Einsatzort ist ansonsten nicht dargestellt.

Die Rechenstäbe 6, deren Anzahl und Abstand nebeneinander, also in Richtung der Achse 8, konstruktiv gewählt werden kann, bilden auf ihrer Außenseite eine Abscheidefläche 10, die an der Überlaufkante 2 beginnt und sich bogenförmig nach aufwärts erstreckt. Es ist erkennbar, daß die Abscheidefläche 10 mit der Höhe der Wassermenge 3 über der Überlaufkante 2 sich ausdehnen kann. Damit wird erreicht, daß sich die Abscheidefläche 10 gleichsam selbsttätig an die Wassermenge anpaßt bzw. für unterschiedliche Wassermengen zur Verfügung steht. Die Rechenstäbe 6 sind ortsfest gelagert.

Den Rechenstäben 6 und der von diesen gebildeten Abscheidefläche 10 ist eine Übernahmeeinheit 11 zugeordnet, die im Einzelnen eine Welle 12 und daran radial abstehende Arme 13 aufweist. An den Armen 13 sind Finger 14 befestigt, deren Geometrie und Anordnung auf die Anordnung der Rechenstäbe 6 abgestimmt ist. Die Finger 14 greifen durch die Zwischenräume zwischen den Rechenstäben 6 hindurch und erstrecken sich über den äußeren Umfang des Zylindermantels 7 bzw. der Abscheidefläche 10 hinaus um ein gewisses Maß. Die Welle 12 bzw. die Übernahmeeinheit 11 wird durch einen nicht dargestellten Antrieb, beispielsweise einen Elektromotor, gemäß Pfeil 15 kontinuierlich oder taktweise umlaufend angetrieben, wobei die Finger 14 der Übernahmeeinheit 11 im Bereich der Überlaufkante 2 in die Zwischenräume zwischen den Rechenstäben 6 eintreten und das an der Abscheidefläche 10 abgeschiedene Rechengut mit nach aufwärts transportieren. Das Rechengut gelangt dann aus dem Bereich der Wassermenge 3 heraus und fällt über den abwärts gekrümmten Teil der Rechenstäbe 6 in eine Querfördereinrichtung 16, die ein oben offenes Gehäuse 17, eine angetriebene Welle 18 und eine Förderwendel 19 aufweisen kann. Es versteht sich, daß die Welle 18 durch einen nicht dargestellten Antrieb drehend angetrieben wird, so daß das abgeworfene Rechengut seitlich hinweggefördert wird. Mit Ausnahme der Abscheidefläche 10, die vom Wasser durchströmt wird, befindet sich das abgeschiedene Rechengut oberhalb einer angedeuteten Überfallinie 20 und damit außerhalb des Wassers. Es ist ersichtlich, daß die Aufnahmekapazität des Überlaufbeckens 5 durch die Höhe der Überlaufkante 2 begrenzt ist, so daß das gereinigte Wasser aus diesem Becken entnommen oder abgeleitet werden muß. Bei einer Speicherung ist das Überlaufbecken 5 entsprechend groß zu gestalten.

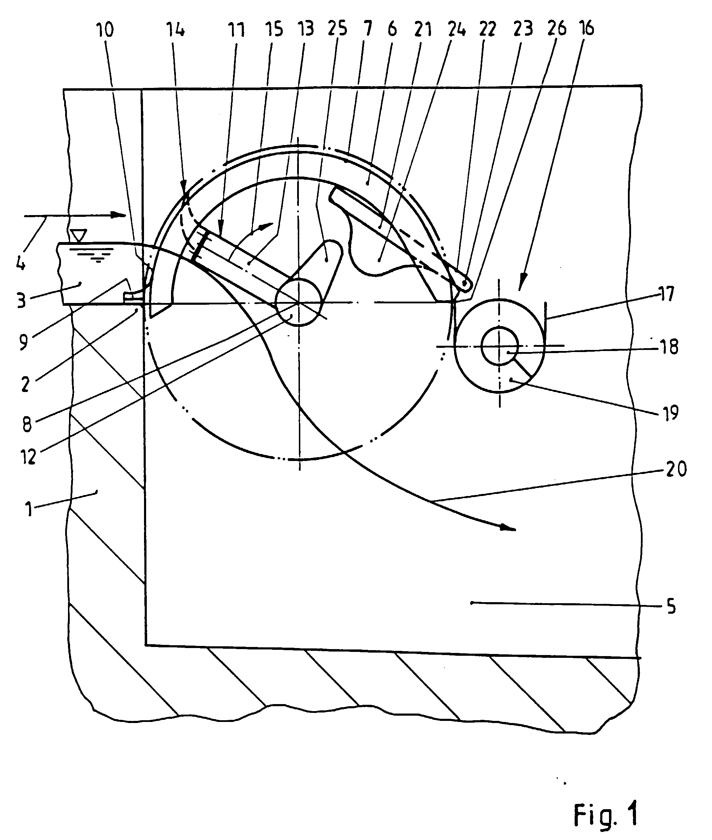

Um den Transport des Rechenguts von der Übernahmeeinheit 11 in die Querfördereinrichtung 16 zu begünstigen oder zu verbessern, kann die Vorrichtung eine Übergabeeinrichtung 21 aufweisen. Die Übergabeeinrichtung 21 weist als wesentlichen Bestandteil eine kammartig ausgebildete Harke 22 auf, deren einzelne Finger oder Stäbe ebenfalls durch die Zwischenräume zwischen den Rechenstäben 6 hindurchgreifen. Die Finger oder Stäbe sind um eine horizontale Achse 23 begrenzt schwenkbar gelagert und erstrecken sich von außen in das Innere des Zylindermantels 7, wobei die Rechenstäbe 6 durchsetzt werden. In Figur 1 ist die eine Endstellung der Übergabeeinrichtung 21 dargestellt, die beispielsweise durch einen nicht dargestellten Anschlag gesichert ist. Einige oder alle Finger oder Stäbe der Übergabeeinrichtung 21 besitzen auf ihrer Unterseite im Innenraum der Vorrichtung einen Anschlag 24, dessen nach unten gekehrte Oberfläche mit einem Nocken 25 zusammenarbeitet, der drehfest auf der Welle 12 angeordnet ist. Beim Umlauf der Welle 12 und damit des Nockens 25 hebt dieser die Übergabeeinrichtung 21 in eine steilere Stellung nach oben aus, so daß auf der nach außen freien Oberfläche der Harke 22 liegengebliebenes Rechengut an der nun steiler gestellten Übergabeeinrichtung herabrutscht und damit in die Querfördereinrichtung 16 einfällt. Gleichzeitig dient die Übergabeeinrichtung 21 dem Transport des Rechenguts über die obere Kante 26 des Gehäuses 17 der Querfördereinrichtung 16 hinweg. Ein Vorteil der Übergabeeinrichtung 21 besteht somit darin, daß die Querfördereinrichtung 16 relativ hoch angeordnet werden kann. Wenn die Querfördereinrichtung 16 relativ zum Zylindermantel 7 im unteren Teil angeordnet wird, kann die Übergabeeinrichtung 21 in der Regel auch entfallen. Die Übergabeeinrichtung 21 hat ansonsten die Aufgabe, sicherzustellen, daß kein abgeschiedenes Rechengut in das gereinigte Wasser des Überlaufbeckens 5 zurückgelangt.

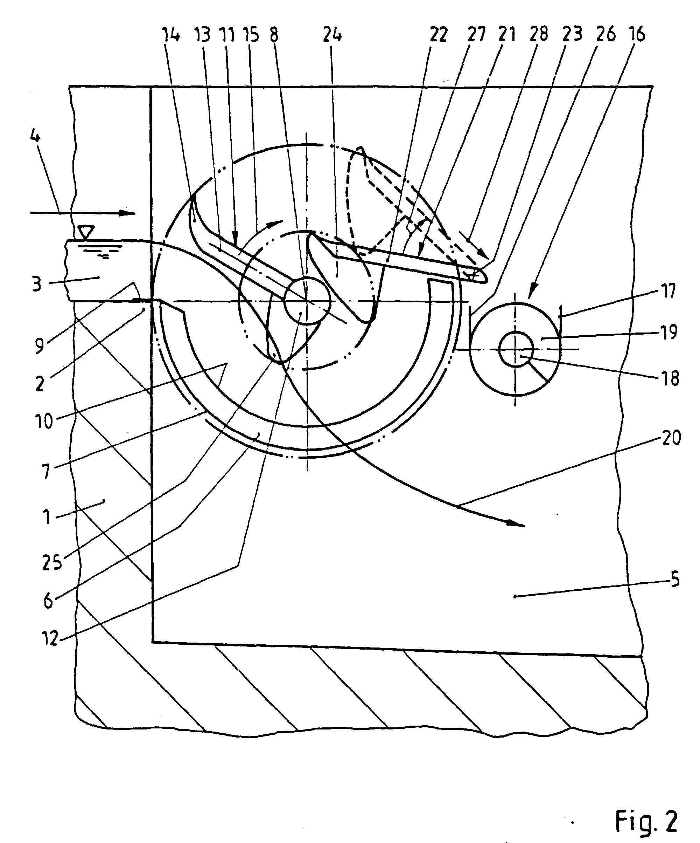

Figur 2 zeigt eine weitere Ausführungsform der Vorrichtung, die prinzipiell ähnlich wie die Vorrichtung gemäß Figur 1 aufgebaut ist, so daß auf die diesbezügliche Beschreibung verwiesen werden kann. Die Rechenstäbe 6 sind hier abweichend zu der Ausführungsform gemäß Figur 1, jedoch nicht im oberen Bereich des Zylindermantels 7, sondern im unteren Bereich ortsfest angeordnet, so daß die Abscheidefläche 10 innen an den Rechenstäben 6 gebildet ist. Die Übernahmeeinheit 11 kann identisch wie bei dem Ausführungsbeispiel der Figur 1 ausgebildet sein. Die Finger 14 können in der gezeigten Richtung gebogen ausgebildet werden. Auch eine gerade, radiale Erstreckung der Finger 14 ist möglich. Es ist hier erkennbar, daß die Finger 14 relativ weiter über die Abscheidefläche 10 in radialer Richtung überstehen, so daß eine entsprechend Menge Rechengut von den Fingern 14 nach aufwärts transportiert werden kann, wenn die Finger 14 aus dem Bereich der Rechenstäbe 6 und der Überfallinie 20 der Wassermenge 3 nach oben austreten.

Die Übergabeeinrichtung 21 ist in ihrer Ausgangslage in durchgezogener Linienführung und in ihrer aufgeschwenkten Stellung gestrichelt dargestellt. Die gestrichelte Stellung wird durch Verschwenkung über den Nocken 25 und den Anschlag 24 in Richtung des Pfeils 27 erreicht. Das übergebene Rechengut rutscht dann gemäß Pfeil 28 in die Querfördereinrichtung 16. Es versteht sich, daß als Querfördereinrichtung 16 auch ein Förderband vorgesehen sein könnte.

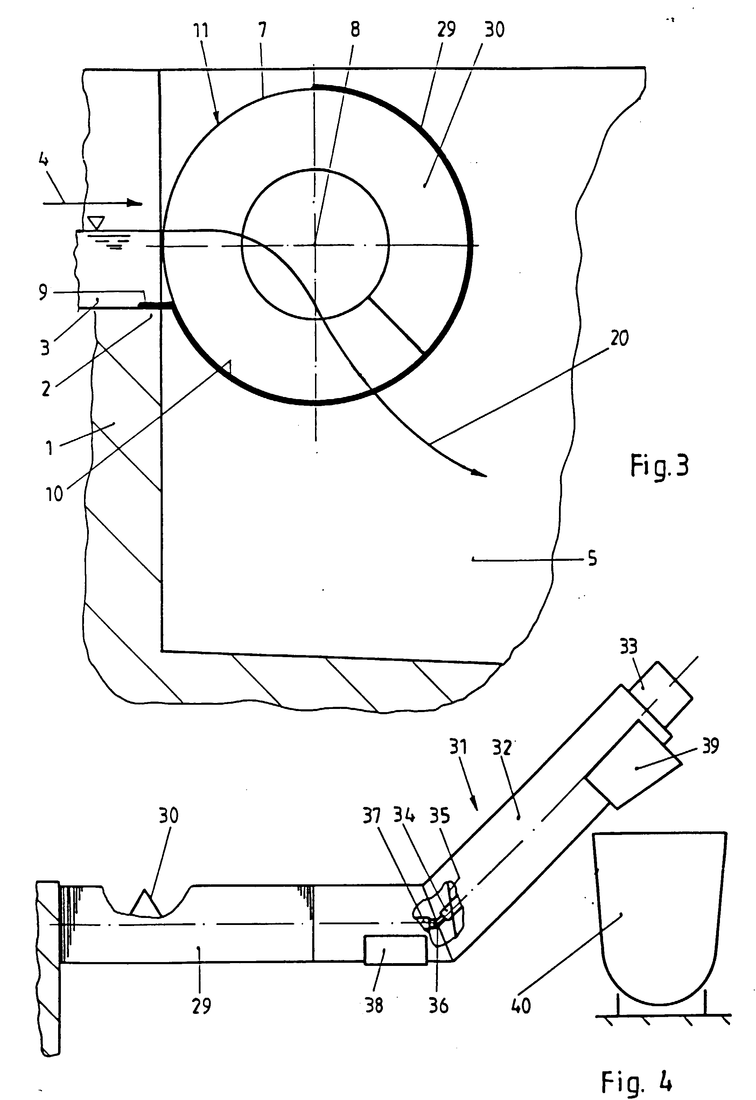

Die Ausführungsform, die in Figur 3 angedeutet ist, stellt eine bauliche Vereinigung der Abscheidefläche, der Übernahmeeinheit 11 und der Querfördereinrichtung 16 dar. Die Abscheidefläche 10 ist als Innenfläche einer Siebwandung 29 gebildet, die sich ebenfalls über einen Teil des Umfangs eines Zylindermantels 7 erstreckt. Die Siebwandung 29 ist der Wassermenge 3 zugekehrt offen gestaltet und schließt mit einem Fortsatz 9 an die Überlaufkante 2 an. Die Siebwandung 29 weist Durchbrechungen, beispielsweise Löcher oder Schlitze, auf, deren Geometrie und Anordnung auf die Feinheit des abzuscheidenden Rechenguts abgestimmt ist. Der damit gebildeten Abscheidefläche 10 ist die Übernahmeeinheit 11 in Form einer Förderwendel 30 zugeordnet, die bevorzugt wellenlos in der gehäuseartigen Siebwandung 29 gelagert ist und entsprechend angetrieben wird. Die äußere Kante der Förderwendel 30 streicht dabei immer wieder an der Siebwandung 29 und insbesondere an der Abscheidefläche 10 entlang, so daß das Rechengut erfaßt und seitlich in Richtung der Achse 8 hinweggefördert wird.

Aus Figur 4 ist erkennbar, daß sich die Vorrichtung in einer aufwärts gerichtete Förderstrecke 31 fortsetzen kann, in deren Gehäuse 32 eine von einem Motor 33 angetriebene Welle 34 mit Förderwendel 35 vorgesehen ist. Die Welle 34 kann mit einem Kardangelenk 36 und einem Wellenstummel 37 verbunden sein, der die auf einem großen Teil ihrer Länge wellenlose Förderwendel trägt und antreibt. Es kann eine Klappe 38 vorgesehen sein, um an dieser Stelle das Rechengut entnehmen und hinwegfördern zu können. In der Regel jedoch wird das Rechengut über die Förderstrecke 31 nach aufwärts gefördert und über eine Schurre 39 in einen Container 40 abgeworfen.

### BEZUGSZEICHENLISTE

- 1 -: Wand
- 2 -: Überlaufkante
- 3 -: Wassermenge
- 4 -: Pfeil
- 5 -: Überlaufbecken
- 6 -: Rechenstab
- 7 -: Zylindermantel
- 8 -: Achse
- 9 -: Fortsatz
- 10 -: Abscheidefläche
- 11 -: Übernahmeeinheit
- 12 -: Welle
- 13 -: Arm
- 14 -: Finger
- 15 -: Pfeil
- 16 -: Querfördereinrichtung
- 17 -: Gehäuse
- 18 -: Welle
- 19 -: Förderwendel
- 20 -: Überfallinie
- 21 -: Übergabeeinrichtung
- 22 -: Harke
- 23 -: Achse
- 24 -: Anschlag
- 25 -: Nocken
- 26 -: Kante
- 27 -: Pfeil
- 28 -: Pfeil
- 29 -: Siebwandung
- 30 -: Förderwendel
- 31 -: Förderstrecke
- 32 -: Gehäuse
- 33 -: Motor
- 34 -: Welle
- 35 -: Förderwendel
- 36 -: Kardangelenk
- 37 -: Wellenstummel
- 38 -: Klappe
- 39 -: Schurre
- 40 -: Container

## Patentansprüche

1. Vorrichtung zum Reinigen großer Wassermengen (3) von Rechengut an Überlaufkanten (2), insbesondere aus Regenrückhaltebecken, Flüssen o. dgl., mit einer stillstehend angeordneten, von der Wassermenge durchflossenen Abscheidefläche (10), die als Stück eines Zylindermantels (7) mit parallel zur Überlaufkante (2) liegender Achse (8) ausgebildet ist, wobei der Abscheidefläche (10) eine um die Achse (8) des Zylindermantels (7) angetriebene Übernahmeeinheit (11) zur Abnahme des an der Abscheidefläche (10) abgeschiedenen Rechenguts zugeordnet ist, dadurch gekennzeichnet, daß die Abscheidefläche (10) mit ihrer Achse (8) etwa auf der Höhe der Überlaufkante (2) angeordnet ist und sich bogenförmig nach oben oder unten über etwa 180° des liegenden Zylindermantels (7) erstreckt, so daß eine Zwangsdurchströmung der Abscheidefläche (10) erfolgt, und daß eine Querfördereinrichtung (16) für den seitlichen Abtransport des abgeschiedenen Rechengutes vorgesehen ist.

2. Vorrichtung nach Anspruch 1, dadurch gekennzeichnet, daß die Abscheidefläche (10) aus mehreren parallel zueinander angeordneten Rechenstäben (6) besteht und als Übernahmeeinheit (11) eine die Rechenstäbe (6) durchdringende kammartige Harke (22) vorgesehen ist.

3. Vorrichtung nach Anspruch 1, dadurch gekennzeichnet, daß die Abscheidefläche (10) aus einer Siebwandung (29) besteht und daß als Übernahmeeinheit (11) eine Förderwendel (30) vorgesehen ist.

4. Vorrichtung nach Anspruch 3, dadurch gekennzeichnet, daß die Förderwendel (30) zusammen mit der Siebwandung (29) zugleich die Querfördereinrichtung (16) ist.

5. Vorrichtung nach Anspruch 4, dadurch gekennzeichnet, daß die Querfördereinrichung (16) eine Scheckenfördereinrichtung mit Gehäuse (17), Förderwendel (19) und Antrieb aufweist.

6. Vorrichtung nach Anspruch 1 oder 2, dadurch gekennzeichnet, daß die Abscheidefläche (10) außen oder innen an den Rechenstäben (6) vorgesehen ist.

7. Vorrichtung nach Anspruch 6, dadurch gekennzeichnet, daß der Abscheidefläche (10) und der Übernahmeeinheit (11) eine Übergabeeinrichtung (21) zugeordnet ist, die kammartig ausgebildet ist und die Rechenstäbe (6) durchsetzt.

8. Vorrichtung nach Anspruch 7, dadurch gekennzeichnet, daß die Übergabeeinrichtung (21) außerhalb des Umfangs der Übernahmeeinheit (11) schwenkbar gelagert ist und einen Anschlag (24)für einen auf der Welle (12) der Übernahmeeinheit (11) angeordneten Nocken (25) aufweist.

9. Vorrichtung nach den Ansprüchen 7 und 8, dadurch gekennzeichnet, daß die Übergabeeinrichtung (21) oberhalb der Querfördereinrichtung (16) gelagert ist.

10. Vorrichtung nach Anspruch 3, dadurch gekennzeichnet, daß die Förderschnecke in eine aufwärts gerichtete Förderstrecke (31) übergeht.

## Claims

1. Device for cleaning large quantities of water (3) from debris at overflow edges (2), especially from rain water reservoirs, rivers, etc., with a stationary separation area (10), which is formed as a section of a cylinder jacket (7) with an axis (8) parallel to the overflow edge, through which the quantity of water flows, where a takeover device (11), which is driven about an axis (8) of the cylinder jacket (7), is assigned to the separation area (10) for removing the debris separated at the separation area (10), **wherein** the separation area (10) with its axis (8) is arranged at about the height of the overflow edge (2) and extends arching to the top or bottom over about 180° of the lying cylinder jacket (7), so that there is a forced flow through the separation area (10), and that a transverse conveyor (16) for transporting the separated debris to the side is provided.

2. A device according to claim 1, **wherein** the separation area (10) is comprised of a number of grating bars (6) arranged parallel to each other and a comb-like rake (22) penetrating the grating bars (6) is provided as the takeover device (11).

3. A device according to claim 1, **wherein** the separation area (10) is comprised of a screen (29) and that the takeover device (11) is provided as a conveyor helix (30).

4. A device according to claim 3, **wherein** the conveyor helix (30) in conjunction with the screen (29) forms the transverse conveyor (16).

5. A device according to claim 4, **wherein** the transverse conveyor (16) has a screw conveyor device with a housing (17), a conveyor helix (19), and a drive.

6. A device according to claim 1 or 2, **wherein** the separation area (10) is provided on the outside or inside of the grating bars (6).

7. A device according to claim 6, **wherein** a passing-on device (21), which is formed in a comb-like fashion and penetrates the grating bars (6), is assigned to the separation area (10) and the takeover device (11).

8. A device according to claim 7, **wherein** the passing-on device (21) is supported swivelling outside the perimeter of the takeover device (11) and has a stop (24) for a cam (25) arranged on the shaft (12) of the takeover device (11).

9. A device according to claims 7 and 8, **wherein** the passing-on device (21) is supported above the transverse conveyor (16).

10. A device according to claim 3, **wherein** the conveyor helix (30) device merges into an upwards directed conveyor line (31).

## Revendications

1. Dispositif d'épuration de grandes quantités d'eau (3) de matières retenues par une grille, sur des bords de déversoir (2), en particulier provenant de bassins d'eaux pluviales, de rivières ou similaires, avec une surface de séparation (10) fixe, traversée par la quantité d'eau, qui est configurée en tant que partie d'une enveloppe cylindrique (7) avec axe (8) parallèle au bord de déversoir (2), à la surface de séparation (10) étant associée une unité de reprise (11) entraînée autour de l'axe (8) de l'enveloppe cylindrique (7), pour l'enlèvement des matières retenues par la grille, séparées sur la surface de séparation (10), caractérisé en ce que la surface de séparation (10) avec l'axe (8) se situe à peu près à hauteur du bord de déversoir (2) et s'étend en arc vers le haut ou vers le bas sur environ 180° de l'enveloppe cylindrique (7) horizontale, de sorte qu'il se produit un écoulement forcé à travers la surface de séparation (10) et en ce qu'il est prévu un dispositif de transport transversal (16) pour l'évacuation latérale des matières retenues par la grille, séparées.

2. Dispositif selon la revendication 1, caractérisé en ce que la surface de séparation (10) est constituée de plusieurs barreaux de grille (6) parallèles entre eux et en tant qu'unité de reprise (11) il est prévu un râteau (22) en peigne traversant les barreaux de grille (6).

3. Dispositif selon la revendication 1, caractérisé en ce que la surface de séparation (10) est constituée d'une paroi de tamis (29) et en ce que comme unité de reprise (11) il est prévu une hélice de transport (30).

4. Dispositif selon la revendication 3, caractérisé en ce que l'hélice de transport (30) constitue conjointement avec la paroi de tamis (29), en même temps, le dispositif de transport transversal (16).

5. Dispositif selon la revendication 4, caractérisé en ce que le dispositif de transport transversal (16) comporte un dispositif de transport à vis sans fin avec carter (17), hélice de transport (19) et entraînement.

6. Dispositif selon la revendication 1 ou 2, caractérisé en ce que la surface de séparation (10) est prévue à l'extérieur ou à l'intérieur sur les barreaux de grille (6).

7. Dispositif selon la revendication 6, caractérisé en ce qu'à la surface de séparation (10) et à l'unité de reprise (11) est associé un dispositif de transfert (21), qui est configuré en peigne et traverse les barreaux de grille (6).

8. Dispositif selon la revendication 7, caractérisé en ce que le dispositif de transfert (21) est monté pivotant à l'extérieur de la périphérie de l'unité de reprise (11) et présente une butée (24) pour une came (25) placée sur l'arbre (12) de l'unité de reprise (11).

9. Dispositif selon les revendications 7 et 8, caractérisé en ce que le dispositif de transfert (21) est monté au-dessus du dispositif de transport transversal (16).

10. Dispositif selon la revendication 3, caractérisé en ce que la vis de transport sans fin se prolonge par un parcours de transport (31) dirigé vers le haut.
